# EUROPÄISCHE PATENTSCHRIFT

(11) **EP 2 784 400 B1**
(45) Veröffentlichungstag und Bekanntmachung des Hinweises auf die Patenterteilung: **22.02.2017**
(21) Anmeldenummer: 14001082.8
(22) Anmeldetag: 24.03.2014
(51) Int. Cl.: F24D 10/00, F24D 11/00

(54) **Verfahren und Vorrichtung zur Einkopplung von Wärme aus einem Wärmenetz**
Method and apparatus for introducing heat from a heating network
Procédé et dispositif d'injection de chaleur depuis un réseau de chaleur

(30) Priorität: 25.03.2013 DE 102013005035
(43) Veröffentlichungstag der Anmeldung: 01.10.2014
(73) Patentinhaber: Ratiotherm Heizung + Solartechnik GmbH & Co. KG, 91795 Dollnstein (DE)
(72) Erfinder: Kruck, Alfons, D-91795 Dollnstein (DE)
(74) Vertreter: Liebl, Thomas

(56) Entgegenhaltungen:
- EP-A2- 1 925 892
- CH-A- 187 961
- DD-A1- 244 188
- DD-A1- 265 216
- DE-A1- 2 756 889
- DE-A1- 3 004 488
- DE-A1- 3 035 946
- DE-T2- 69 305 503

## Beschreibung

Die Erfindung betrifft ein Verfahren zur Einkopplung von Wärme aus einem Wärmenetz nach dem Patentanspruch 1 sowie eine Vorrichtung zur Einkopplung von Wärme aus einem Wärmenetz nach dem Oberbegriff des Anspruchs 12.

Der Einsatz von Wärmenetzen, wie zum Beispiel Fernwärmenetzen oder Nahwärmenetzen, ist allgemein bekannt. Mit den Wärmenetzen werden mehrere Abnehmer mit Wärme versorgt. Die Wärme wird dabei zentral über zum Beispiel ein Blockheizkraftwerk (BHKW) bereitgestellt. Nahwärmenetze unterscheiden sich von Fernwärmenetzen in der Regel durch einen geringeren Leistungsbedarf sowie ein niedrigeres Temperaturprofil, in der Regel unter 95°C.

Die Technik der Wärmenetze, insbesondere der Nahwärmenetze, hat jedoch auch Nachteile. So sind die Wärmeverluste im Verteilernetz zu den daran angeschlossenen Heizkreisläufen, in denen die Wärmeverbraucher angeordnet sind, nicht zu vernachlässigen: so ist auch im Sommer, und hier im Wesentlichen nur für die Warmwasserbereitung, eine sehr hohe netzseitige Vorlauftemperatur vorzuhalten, die gegenüber dem Winterbetrieb im Wesentlichen fast unverändert ist. Das gleiche gilt analog für den Fall, dass, unabhängig von einem Sommerbetrieb, eine relativ hohe Netztemperatur deswegen vorgehalten werden muss, weil für wenige oder auch lediglich einen der Heizkreisläufe bzw. daran angeschlossenen Verbraucher eine höhere Temperatur benötigt wird. Derartige hohe netzseitige Vorlauftemperaturen haben aber zwingend auch stets hohe Wärmeverluste zur Folge, die dementsprechend den Wirkungsgrad verringern und einen hohen Energieeinsatz erfordern.

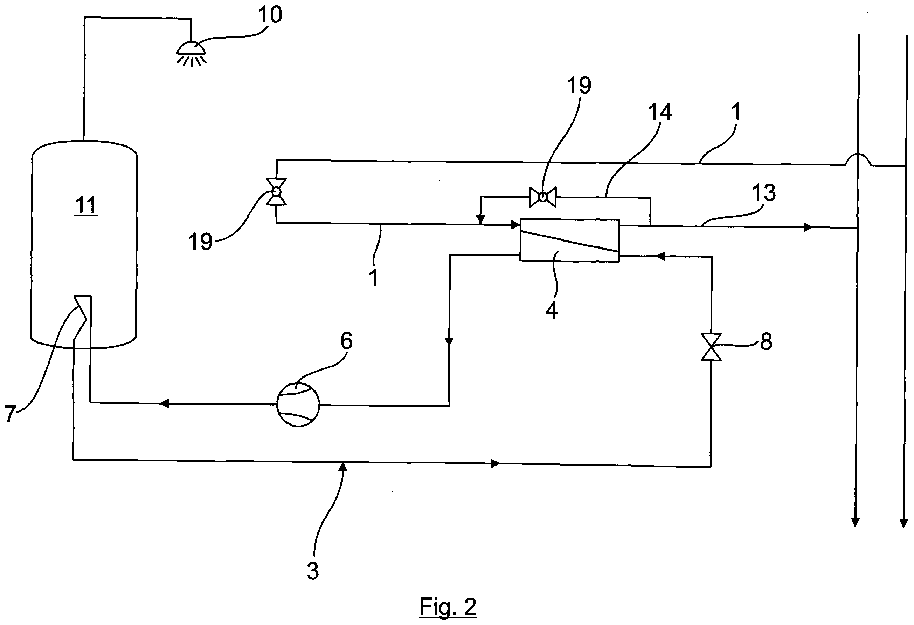

Aus der DE 30 35 946 A1 ist ein Verfahren zur Rücklauftemperaturabsenkung in einem Fernwärmenetz eines Heizkraftwerks bekannt, bei dem Wärme einer Fernwärmeleitung über einen Wärmetauscher (dortige Figur 2) in einen Heizkreislauf eingekoppelt wird, der mit einem Wärmepumpenkreislauf gekoppelt ist. Dieses Dokument zeigt den Oberbegriff der Ansprüche 1 und 12.

Fernwärmesysteme in Verbindung mit Wärmepumpen sind ferner aus der DE 30 04 488 A1
und aus der DE 30 37 910 A1 bekannt.

Demgegenüber ist es Aufgabe der vorliegenden Erfindung, ein Verfahren und eine Vorrichtung zur Einkopplung von Wärme aus einen Wärmenetz in eine Mehrzahl von daran angeschlossenen Heizkreisläufen, in denen jeweils wenigstens ein Wärmeverbraucher angeordnet ist, zu schaffen, mittels dem bzw. mittels der die Betriebssicherheit erhöht und/oder der Energieaufwand für die Wärmeerzeugung ebenso wie die Wärmeverluste noch weiter reduziert werden kann bzw. können.

Diese Aufgabe wird gelöst durch die Merkmale der unabhängigen Patentansprüche. Vorteilhafte Ausgestaltungen hierzu sind Gegenstand der darauf rückbezogenen Unteransprüche.

Gemäß Anspruch 1 wird ein Verfahren zur Einkopplung von Wärme aus einem Wärmenetz in eine Mehrzahl von daran angeschlossenen Heizkreisläufen vorgeschlagen, in denen jeweils wenigstens ein Wärmeverbraucher
angeordnet ist. Zur Einkopplung der Wärme vom Wärmenetz in die Heizkreisläufe ist pro Heizkreislauf wenigstens ein Verdampfer eines Wärmepumpenkreislaufs vorgesehen, der dergestalt in eine, ein Wärmenetzmedium führende Wärmenetzleitung des Wärmenetzes eingekoppelt ist, dass ein Arbeitsmedium, vorzugsweise ein Kältemittel, des Wärmepumpenkreislaufs durch Wärmeübertragung vom Wärmenetzmedium verdampft wird. Das verdampfte Arbeitsmedium ist in einem dem Verdampfer nachgeschalteten Verdichter des Wärmepumpenkreislaufs
verdichtbar und anschließend zu einem Kondensator des Wärmepumpenkreislaufs gefördert wird, mittels dem das eine erste Heizmedium-Temperatur aufweisende und den Kondensator durchströmende Heizmedium des Heizkreislaufs durch Wärmeübertragung vom Arbeitsmedium auf eine zweite Heizmedium-Temperatur, die
größer als die erste Heizmedium-Temperatur ist, erwärmt wird ist. Erfindungsgemäß ist vorgesehen, dass das den Verdampfer verlassende Wärmenetzmedium solange im Kreislauf geführt und wieder stromauf des Verdampfers in eine Netz-Vorlaufleitung der Wärmenetzleitung eingespeist wird, bis das Wärmenetzmedium eine definierte Rücklauftemperatur erreicht hat.

Zur Einkopplung der Wärme vom Wärmenetz in die Heizkreisläufe ist somit pro Heizkreislauf wenigstens ein Verdampfer als Übergabestation vorgesehen, mittels dem Wärme von einem in einer Vorlaufleitung des Wärmenetzes geführten Wärmenetzmedium, zum Beispiel Wasser, an ein in einer Rücklaufleitung des Heizkreislaufes geführtes Heizmedium, in der Regel ebenfalls Wasser, übertragbar ist. Das den Verdampfer verlassende Wärmenetzmedium wird bevorzugt solange im Kreislauf geführt und wieder stromauf des Verdampfers in die Wärmenetz-Vorlaufleitung eingespeist, bis das Wärmenetzmedium eine definierte Rücklauftemperatur von 10°C bis 30°C, bevorzugt von 20°C bis 30°C, erreicht hat.

Die Möglichkeit der hohen Rücklaufauskühlung hilft die Netzverluste zu reduzieren. Denn dadurch wird der Temperaturunterschied zwischen dem Netz-Vorlauf und dem Netz-Rücklauf größer, so dass das Netz mit kleineren Rohrdurchmessern die gleiche Energie transportieren kann. Zudem erlaubt die erfindungsgemäße Verfahrensführung in besonders vorteilhafter Weise eine exakte Regelung des Verdampfungspunktes des jeweiligen Arbeitsmediums des zugeordneten Wärmepumpenkreislaufs.

Gemäß einer besonders bevorzugten Ausführungsform, insbesondere für Großanlagen, bei der eine sehr große Anzahl von Heizkreisläufen und/oder unterschiedliche Heizkreisläufe und/oder hinsichtlich des Wärmebedarfs groß dimensionierte Heizkreisläufe angeschlossen sind, kann optional zur Einkopplung der Wärme vom Wärmenetz in die Heizkreisläufe zumindest für einen Teil der Heizkreisläufe, bevorzugt jedoch pro Heizkreislauf, weiter wenigstens ein Netz/Heizkreislauf-Wärmetauscher vorgesehen sein, der stromauf des Verdampfers in die Netz-Vorlaufleitung eingekoppelt ist und mittels dem Wärme von dem in der Netz-Vorlaufleitung des Wärmenetzes geführten Wärmenetzmedium an das in einer
Rücklaufleitung des Heizkreislaufes geführte Heizmedium übertragen wird ist. Der Kondensator des Wärmepumpenkreislaufs ist hier dann bevorzugt stromab des Netz/Heizkreislauf-Wärmetauschers in den Heizkreislauf eingeschaltet ist, so dass dort das vom Netz/Heizkreislauf-Wärmetauscher kommende und eine erste Heizmedium-Temperatur aufweisende, insbesondere vom Netz/ Heizkreislauf-Wärmetauscher auf eine erste Heizmedium-Temperatur erwärmte, Heizmedium durch Wärmeübertragung vom Arbeitsmedium auf eine zweite Heizmedium-Temperatur, die größer als die erste Heizmedium-Temperatur ist, erwärmt wird ist.

Bei einer derartigen Ausführungsform wird das den Verdampfer verlassende Wärmenetzmedium bevorzugt mittels einer Rückführleitung stromauf des Verdampfers und stromab des Netz/Heizkreislauf-Wärmetauschers in die Netz-Vorlaufleitung rückgeführt.

Bei einem derartigen Aufbau mit einem Netz/Heizkreislauf-Wärmetauscher kann die Einkopplung von Wärme mittels einer Steuer- und/oder Regeleinrichtung dergestalt gesteuert bzw. geregelt werden, dass das Wärmenetz in definierten ersten Betriebszuständen, zum Beispiel in definierten Volllast- oder Hochlastbetriebszuständen, beispielsweise im Winter, mit einer ersten Wärmenetz-Vorlauftemperatur betrieben wird und die den Heizkreisläufen jeweils zugeordneten Wärmepumpenkreisläufe abgeschaltet sind, so dass das Heizmedium des jeweiligen Heizkreislaufs alleine durch Wärmetausch mit dem jeweils zugeordneten Netz/Heizkreislauf-Wärmetauscher erwärmt wird. Das heißt, dass bei derartigen Volllast- oder Hochlastbetriebszuständen die netzseitige Vorlauftemperatur des Wärmenetzes von vorneherein bereits so hoch ist, dass heizkreislaufseitig kein weiterer Temperaturhub mittels des Wärmepumpenkreislaufs mehr erforderlich ist.

Andererseits wird das Wärmenetz in definierten zweiten Betriebszuständen, insbesondere in definierten Teillast- oder Schwachlastbetriebszuständen, wie beispielsweise im Sommerbetrieb oder in den Übergangszeiten im Herbst und im Frühjahr, mit einer Wärmenetz-Vorlauftemperatur betrieben, die kleiner als die erste Wärmenetz-Vorlauftemperatur der definierten ersten Betriebszustände ist. In diesem Fall sind dann die den Heizkreisläufen jeweils zugeordneten Wärmepumpenkreisläufe zugeschaltet, so dass das vom jeweiligen Netz/Heizkreislauf-Wärmetauscher auf eine erste Heizmedium-Temperatur erwärmte Heizmedium auf eine zweite Heizmedium-Temperatur, die größer als die erste Heizmedium-Temperatur ist, erwärmt wird. In diesen sogenannten zweiten Betriebszuständen kann somit die Netztemperatur vorteilhaft reduziert werden, weil diejenigen Heizkreisläufe, die mit der reduzierten Temperatur nicht zurecht kommen, über den zugeschalteten Wärmepumpenkreislauf dann die Möglichkeit haben, das Temperaturniveau des jeweiligen Heizkreislaufs individuell anzuheben.

Besonders vorteilhaft kann dadurch das Wärmenetz, zum Beispiel ein Nahwärmenetz, auf einem niedrigen, das heißt "kalten" Temperaturniveau (zum Beispiel 20 bis 25 °C) gehalten werden und muss somit nicht netzseitig ein solchermaßen hohes Temperaturniveau vorgehalten werden, das der Heizkreislauf mit dem höchsten Temperaturniveau bzw. -anforderung erfordert. Dies hilft wesentlich, die Wärmeverluste im Verteilnetz zu reduzieren und gleichzeitig auch den Energiebedarf für die Wärmeerzeugung über den Verlauf eines Jahres bzw. mehrerer Monate deutlich zu reduzieren.

Gemäß einer besonders bevorzugten Verfahrensführung wird vorgeschlagen, dass die Wärmenetz-Vorlauftemperatur in den definierten ersten Betriebszuständen, insbesondere in definierten Volllast- oder Hochlastbetriebszuständen, in denen der Wärmepumpenkreislauf abgeschaltet ist, 50°C bis 95°C, insbesondere 55°C bis 75°C beträgt.

Desweiteren beträgt die Wärmenetz-Vorlauftemperatur gemäß einer besonders bevorzugten Ausführungsform in den definierten zweiten Betriebszuständen, insbesondere in definierten Teillast- oder Schwachlastbetriebszuständen, in denen der Wärmepumpenkreislauf zugeschaltet ist, 20°C bis 60°C, insbesondere 20°C bis 50°C.

Wie die erfinderseitigen Versuche gezeigt haben, ergeben sich mit derartigen konkreten Temperaturen hinsichtlich des Wirkungsgrads die besten Ergebnisse.

Insbesondere bei Kleinanlagen mit wenigen und/oder klein dimensionierten Heizkreisläufen und/oder sehr ähnlich aufgebauten Heizkreisläufen, kann dagegen auf den Einsatz des optionalen Netz/Heizkreislauf-Wärmetauschers verzichtet werden. Bevorzugt wird in diesen Fällen, in denen kein Netz/Heizkreislauf-Wärmetauscher vorgesehen ist, das Wärmenetz mit einer definierten Wärmenetz-Vorlauftemperatur, bevorzugt von 20°C bis 60°C, höchst bevorzugt von 20°C bis 50°C, betrieben und ist der dem Heizkreislauf zugeordnete Wärmepumpenkreislauf dauerhaft zugeschaltet, um das eine erste Heizmedium-Temperatur aufweisende Heizmedium mittels des Kondensators auf eine zweite Heizmedium-Temperatur, die größer als die erste Heizmedium-Temperatur ist, erwärmen zu können.

Ein sehr guter Gesamtwirkungsgrad ergibt sich auch bei einer besonders bevorzugten Verfahrensführung, gemäß der der Wärmepumpenkreislauf so ausgelegt ist, dass dieser am Kondensator einen Temperaturhub ausführt, mittels dem das Heizmedium auf eine Temperatur von 50°C bis 80°C, insbesondere von 60°C bis 75°C, als zweite Heizmedium-Temperatur erwärmt wird ist.

Gemäß einer weiteren besonders bevorzugten Verfahrensführung wird dem Wärmenetz Wärme aus einem Energiekraftwerk zugeführt, das insbesondere durch ein Blockheizkraftwerk (BHKW) und/oder einer Biogasanlage gebildet ist.

Mittels eines derartigen Energiekraftwerks wird bevorzugt Strom erzeugt, der über eine separate Stromleitung, die vorzugsweise entlang der Netzleitungen geführt ist, zu dem Verdichter des Wärmepumpenkreislaufs geführt ist. Bei einer derartigen Ausgestaltung wird somit neben der Wärme auch der erforderliche Strom vom jeweils zugeordneten Energiekraftwerk, zum Beispiel
einem Blockheizkraftwerk, geliefert. Alternativ oder zusätzlich kann der Strom aber auch aus einem öffentlichen Netz bezogen werden. In diesem Zusammenhang ist weiter eine Verfahrensführung vorteilhaft, bei der eine Energieverteilereinrichtung vorgesehen ist, mittels der den Verdichtern der Wärmepumpenkreisläufe der benötigte Strom last- und/oder bedarfsabhängig für jeden Heizkreislauf zugeführt wird.

Gemäß einer weiteren besonders bevorzugten Verfahrensführung wird vorgeschlagen, dass wenigstens einem der Heizkreisläufe, vorzugsweise jedem, ein Photovoltaik-Modul zugeordnet ist, mittels dem Strom erzeugt werden kann. Dieser Strom aus dem Photovoltaik-Modul kann dann zu vorgegebenen Zeiten für eine vorgegebene Zeitdauer dem Wärmepumpenkreislauf zugeführt werden, um diesen einzuschalten und/oder um den Verdichter des Wärmepumpenkreislaufs zu betätigen, so dass das durch Wasser gebildete Heizmedium des Heizkreislaufs aufgeheizt wird und in einen dem Heizkreislauf zugeordneten Schichtspeicher geschichtet eingespeichert wird. Mit einem derartigen Photovoltaik-Modul ist somit, insbesondere im Sommer, ein reiner Solarbetrieb möglich. Sobald über das Photovoltaik-Modul Strom ansteht, können die zugeordneten Wärmepumpenkreisläufe eingeschaltet werden und die Schichtspeicher in den angeschlossenen Heizkreisläufen geladen werden. In der Regel ist dann auch genügend thermische Sonnenenergie vorhanden, die als Energiequelle für die Verdichter zur Verfügung steht. Der Vorteil liegt hier insbesondere auch darin, dass keine öffentlichen Stromnetze belastet bzw. überlastet werden.

Gemäß einer weiteren besonders bevorzugten Verfahrensführung wird vorgeschlagen, dass stromauf des wenigstens einen optional vorgesehenen Netz/Heizkreislauf-Wärmetauschers eine Bypassleitung von einer Rücklaufleitung des Heizkreislaufes abzweigt, die zum einen stromab des wenigstens einen Netz/Heizkreislauf-Wärmetauschers und zum anderen Stromauf des Kondensators des Wärmepumpenkreislaufes in eine Vorlaufleitung des Heizkreislaufes mündet. Dadurch kann bei definiert vorgegebenen Betriebszuständen, zum Beispiel bei den zuvor genannten zweiten Betriebszuständen, also zum Beispiel im Teillastbetrieb und/oder im Schwachlastbetrieb, wie diese beispielsweise in den Übergangszeiten Herbst und Frühjahr sowie im Sommer gegeben sein können, der wenigstens eine Netz/Heizkreislauf-Wärmetauscher überbrückt und das Heizmedium alleine durch den Wärmepumpenkreislauf erwärmt wird. Damit lässt sich die Verfahrensführung weiter energetisch optimieren.

Gemäß einer besonders bevorzugten und funktionsintegrierten bzw. platzsparenden Lösung kann der Kondensator des Wärmepumpenkreislaufs zudem in den Schichtspeicher des jeweiligen Heizkreislaufes integriert sein. Hierdurch ergeben sich zudem auch besonders stabile Betriebsverhältnisse für den Kondensator selbst.

Die sich mit dem unabhängigen Vorrichtungsanspruch 12 ergebenden Vorteile wurden bereits zuvor mit der erfindungsgemäßen Verfahrensführung ausführlich gewürdigt. Insofern wird auf die dort gemachten Ausführungen verwiesen.

Das gleiche gilt analog für die darauf rückbezogenen Unteransprüche.

An dieser Stelle soll nochmals ausdrücklich erwähnt werden, dass die Begrifflichkeit Heizkreislauf hier Bestandteil eines Haushalts, eines Gebäudes, eines Industriebetriebs etc. sein kann.

Die Erfindung wird nachfolgend anhand einer Zeichnung näher erläutert:
Es zeigen:
   - Fig. 1: eine schematisches Fließbild einer ersten beispielhaften Ausführungsform, und
   - Fig. 2: ein schematisches Fließbild einer alternativen Ausführungsvariante.

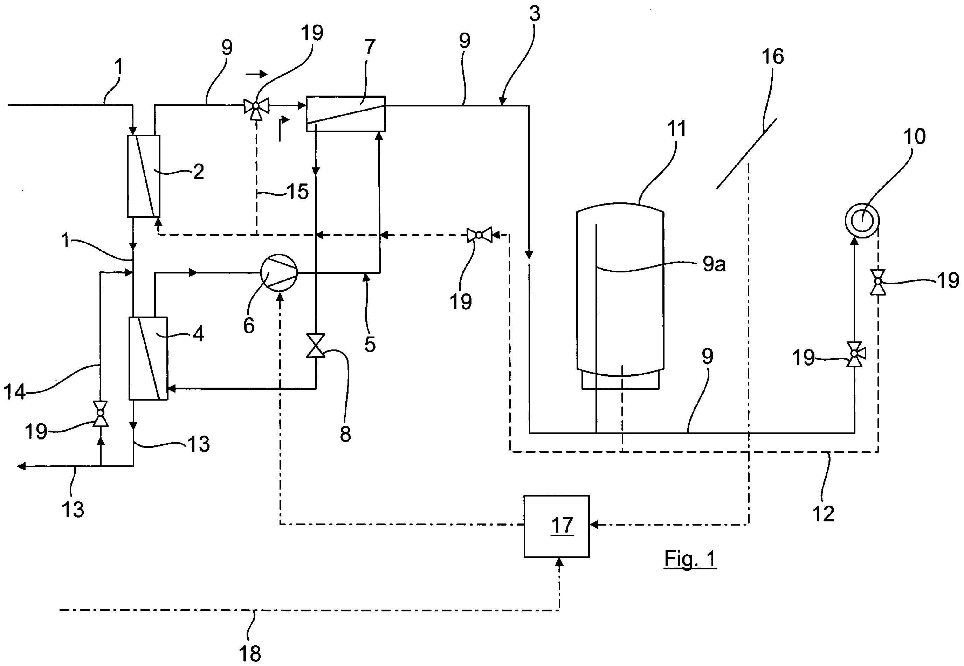

Die Figur 1 zeigt auf der linken Seite eine Netz-Vorlaufleitung eines hier nicht dargestellten Wärmenetzes, insbesondere eines Nahwärmenetzes, in die ein Netz/Heizkreislauf-Wärmetauscher 2 eines Heizkreislaufs 3 eingeschaltet ist.

Stromab des Netz/Heizkreislauf-Wärmetauschers 2 ist ein Verdampfer 4 eines Wärmepumpenkreislaufs 5 eingeschaltet, mittels dem ein im Kreislauf des Wärmepumpenkreislaufes 5 geführtes Arbeitsmedium durch Wärmeübertragung vom in der Netz-Vorlaufleitung geführten Wärmenetzmedium verdampfbar ist.

Das verdampfte Arbeitsmedium wird in einem dem Verdampfer 4 nachgeschalteten Verdichter 6 verdichtet und von dort aus zu einem Kondensator 7 des Wärmepumpenkreislaufs 5 geführt. Das im Kondensator 7 verflüssigte Arbeitsmedium des Wärmepumpenkreislaufs 5 strömt dann über eine Drossel 8 zurück zum Verdampfer 4.

Wie dies der Figur 1 weiter zu entnehmen ist, führt vom Netz/Heizkreislauf-Wärmetauscher 2 eine Heizkreislauf-Vorlaufleitung 9 letztendlich zu einem Verbraucher 10 eines zum Beispiel Haushaltes, wobei in dieser Heizkreislauf-Vorlaufleitung 9 erwärmtes Heizmedium, zum Beispiel Wasser, geführt ist, das im Netz/Heizkreislauf-Wärmetauscher 2 auf eine bestimmte Temperatur erwärmt wird und vor der Zuführung zum Verbraucher 10 beispielsweise in einem Schichtspeicher 11 zwischengespeichert werden kann, wie dies in der Fig. 1 lediglich beispielhaft mit der Leitung 9a gezeigt ist.

Vom hier lediglich symbolisch dargestellten Verbraucher 10 führt eine hier strichliert gezeichnete Heizkreislauf-Rücklaufleitung 12 zum Netz/Heizkreislauf-Wärmetauscher 2, in dem das Wasser als hier beispielhaftes Heizmedium auf eine gewünschte erste Temperatur erwärmt wird. Für den Fall, dass im Volllastbetrieb des Wärmenetzes die Temperatur in der Netz-Vorlaufleitung 1 zum Beispiel 60°C beträgt, kann dann zum Beispiel mittels des Netz/Heizkreislauf-Wärmetauschers 2 in der Heizkreislauf-Vorlaufleitung 9 eine Temperatur von zum Beispiel ca. 58°C erzielt werden (die Rücklauftemperatur in der Heizkreislauf-Rücklaufleitung 12 kann zum Beispiel 50°C betragen).

Sollte diese mittels des Netz/Heizkreislauf-Wärmetauschers 2 erzielte Temperatur ausreichend sein, wird der Wärmepumpenkreislauf 5 nicht zugeschaltet und dementsprechend Warmwasser mit der eben beispielhaft genannten Temperatur von ca. 58°C zum Verbraucher 10 bzw. in den Schichtspeicher 11 gefördert.

Für den Fall aber, dass die hier beispielhaft angegebene Temperatur von 58°C als nicht ausreichend hoch erachtet werden sollte, kann dann der Wärmepumpenkreislauf 5 hinzugeschalten werden und die Temperatur des den Netz/Heizkreislauf-Wärmetauscher 2 verlassenden Heizmediums, zum Beispiel Wasser, noch weiter erhöht werden, zum Beispiel auf 70°C erhöht werden.

Wie dies in der Figur 1 weiter dargestellt ist, führt vom Verdampfer 4 eine Netz-Rücklaufleitung 13 weg, von der wiederum eine Rückführleitung 14 abzweigt, die stromauf des Verdampfers und stromab des Netz/Heizkreislauf-Wärmetauschers 2 in die Netz-Vorlaufleitung 1 einmündet. Mit dieser Rückführleitung 14 kann das den Verdampfer 4 verlassende Wärmenetzmedium solange im Kreislauf geführt und wieder stromauf des Verdampfers 4 in die Wärmenetz-Vorlaufleitung 1 eingespeist werden, bis das Wärmenetzmedium eine definierte Rücklauftemperatur erreicht hat, insbesondere eine Rücklauftemperatur von 10°C bis 30°C erreicht hat.

Desweiteren kann stromauf des Netz/Heizkreislauf-Wärmetauschers 2 eine Bypassleitung 15 von der Heizkreislauf-Rücklaufleitung 12 abzweigen, die zum einen stromab des Netz/Heizkreislauf-Wärmetauschers 2 und zum anderen stromauf des Kondensators 7 in die Heizkreislauf-Vorlaufleitung 9 einmündet. Dadurch kann der Netz/Heizkreislauf-Wärmetauscher 2 überbrückt werden und das im Heizkreislauf geführte Heizmedium alleine durch den Wärmepumpenkreislauf 5 bzw. dessen Kondensator 7 erwärmt werden. Dies kann zum Beispiel vorteilhaft sein, wenn im Sommerbetrieb des Wärmenetzes bzw. in den Übergangsjahreszeiten im Frühjahr und im Herbst die netzseitige Vorlauftemperatur relativ niedrig ist, beispielsweise zwischen 20°C und 25°C liegt und von einem Heizkreislauf zum Beispiel kurzfristig oder nur zum Einspeichern in den Schichtspeicher 11 eine höhere Warmwassertemperatur gefordert wird. In diesem Fall braucht dann nicht über das Wärmenetz eine entsprechend hohe Temperatur vorgehalten werden, sondern kann dies individuell für jeden Heizkreislauf mittels Zuschalten des Wärmepumpenkreislaufs 5 erreicht werden.

Wie weiter aus Fig. 1 ersichtlich ist, kann zum Beispiel ein Photovoltaik-Modul 16 vorgesehen sein, das Strom erzeugt. Mit diesem Strom kann zum Beispiel der Wärmepumpenkreislauf 5 bzw. dessen Verdichter 6 gespeist werden, wie dies in der Fig. 1 strichpunktiert eingezeichnet ist. In diesem Fall kann dann, zum Beispiel bei gleichzeitiger Überbrückung des Netz/Heizkreislauf-Wärmetauschers 2 über die Bypassleitung 15 mittels des Wärmepumpenkreislaufs 6 das Heizmedium des Heizkreislaufs 3 auf eine gewünschte Temperatur erwärmt werden und in den Schichtspeicher 11 eingespeichert werden.

Wie in der Fig. 1 weiter dargestellt, kann dem Wärmenetz ferner eine Energieverteilereinrichtung 17 zugeordnet sein, mittels dem der von einem angeschlossenen Blockheizkraftwerk erzeugte Strom (Strompfeil 18) last-und/oder bedarfsabhängig für jeden Heizkreislauf 3 den Wärmepumpenkreisläufen 5 bzw. deren Verdichtern 6 zugeführt wird. Über die Energieverteilereinrichtung 17 kann selbstverständlich auch der von dem jeweiligen Photovoltaik-Modul 16 gelieferte Strom entsprechend verteilt werden.

Mit einem derartigen erfindungsgemäßen Aufbau kann somit ein Wärmenetz in definierten Volllast- oder Hochlastbetriebszuständen, in denen das Netz mit sehr hohen Temperaturen gefahren wird, beispielsweise mit Temperaturen von 50°C bis 95°C gefahren wird, alleine die Wärme stellen, das heißt, dass die den jeweiligen Heizkreisläufen zugeordneten Wärmepumpenkreisläufe 5 abgeschaltet bleiben, so dass das Heizmedium der Heizkreisläufe 3 alleine durch den Wärmetausch mit dem jeweils zugeordneten Netz/Heizkreislauf-Wärmetauscher 2 erwärmt wird.

In demgegenüber definierten unterschiedlichen zweiten Betriebszuständen, zum Beispiel in Teillast- oder Schwachlast-Betriebszuständen, wie diese im Sommer bzw. im Frühjahr und Herbst vorherrschen können, kann dagegen die Wärmenetz-Vorlauftemperatur wesentlich erniedrigt werden, zum Beispiel das Netz auch "Kalt" (zum Beispiel 20°C bis 25°C) betrieben werden, weil dann durch das zusätzliche Zuschalten der Wärmepumpenkreisläufe sichergestellt wird, dass die Temperatur des Heizmediums individuell und zu definierten Zeiten sowie für eine definierte Zeitdauer auf die gewünschte hohe Temperatur erwärmt werden kann, ohne dass die netzseitige Vorlauftemperatur entsprechend erhöht wird.

In der Fig. 1 sind des Weiteren noch Ventile 19 dargestellt, die in an sich bekannter Weise das Zuschalten und Abschalten oder Beimischen der einzelnen Strömungspfade gewährleisten können.

In der Fig. 2 ist eine zur Figur 1 alternative, "abgespeckte" Verfahrensführung und Vorrichtung gezeigt, bei der lediglich der Verdampfer 4 in die Netz-Vorlaufleitung 1 eingekoppelt, jedoch kein Netz/Heizkreislauf-Wärmetauscher 2 vorgesehen ist, wie dies bei der Figur 1 der Fall ist. Zudem ist hier der Kondensator 7 in den Schichtspeicher 11 des Heizkreislaufs 3 integriert. Ansonsten entspricht der Aufbau und die Funktionsweise dem- bzw. derjenigen der Figur 1.

## Patentansprüche

1. Verfahren zur Einkopplung von Wärme aus einem Wärmenetz in eine Mehrzahl von daran angeschlossenen Heizkreisläufen (3), in denen jeweils wenigstens ein Wärmeverbraucher (10) angeordnet ist,
wobei zur Einkopplung der Wärme vom Wärmenetz in die Heizkreisläufe (3) pro Heizkreislauf (3) wenigstens ein Verdampfer (4) eines Wärmepumpenkreislaufs (5) vorgesehen ist, der dergestalt in eine, ein Wärmenetzmedium führende Wärmenetzleitung des Wärmenetzes eingekoppelt ist, dass ein Arbeitsmedium des Wärmepumpenkreislaufs (5) durch Wärmeübertragung vom Wärmenetzmedium verdampft wird,
wobei das verdampfte Arbeitsmedium in einem dem Verdampfer (4) nachgeschalteten Verdichter (6) des Wärmepumpenkreislaufs (5) verdichtet und anschließend zu einem Kondensator (7) des Wärmepumpenkreislaufs (5) gefördert wird, mittels dem das eine erste Heizmedium-Temperatur aufweisende und den Kondensator (7) durchströmende Heizmedium des Heizkreislaufs (3) durch Wärmeübertragung vom Arbeitsmedium auf eine zweite Heizmedium-Temperatur, die größer als die erste Heizmedium-Temperatur ist, erwärmt wird,
**dadurch gekennzeichnet,**
**dass** das den Verdampfer (4) verlassende Wärmenetzmedium solange im Kreislauf geführt und wieder stromauf des Verdampfers (4) in eine Netz-Vorlaufleitung (1) der Wärmenetzleitung eingespeist wird, bis das Wärmenetzmedium eine definierte Rücklauftemperatur erreicht hat.

2. Verfahren nach Anspruch 1, **dadurch gekennzeichnet,**
**dass** zur Einkopplung der Wärme vom Wärmenetz in die Heizkreisläufe (3) für wenigstens einen Teil der Heizkreisläufe (3), insbesondere pro Heizkreislauf (3), weiter wenigstens ein Netz/Heizkreislauf-Wärmetauscher (2) vorgesehen ist, der stromauf des Verdampfers (4) in die Netz-Vorlaufleitung (1) eingekoppelt ist und mittels dem Wärme von dem in der Netz-Vorlaufleitung (1) des Wärmenetzes geführten Wärmenetzmedium an das in einer Rücklaufleitung (12) des Heizkreislaufes (3) geführte Heizmedium übertragen wird,
**dass** der Kondensator (7) des Wärmepumpenkreislaufs (5) stromab des Netz/Heizkreislauf-Wärmetauschers (2) in den Heizkreislauf (3) eingeschaltet ist, so dass dort das vom Netz/Heizkreislauf-Wärmetauscher (2) kommende und eine erste Heizmedium-Temperatur aufweisende, insbesondere vom Netz/Heizkreislauf-Wärmetauscher (2) auf eine erste Heizmedium-Temperatur erwärmte, Heizmedium durch Wärmeübertragung vom Arbeitsmedium auf eine zweite Heizmedium-Temperatur, die größer als die erste Heizmedium-Temperatur ist, erwärmt wird.

3. Verfahren nach Anspruch 2, **dadurch gekennzeichnet,**
**dass** die Einkopplung von Wärme dergestalt mittels einer Steuer- und/oder Regeleinrichtung gesteuert und/oder geregelt wird,
**dass** das Wärmenetz in definierten ersten Betriebszuständen, insbesondere in definierten Volllast- oder Hochlastbetriebszuständen, mit einer ersten Wärmenetz-Vorlauftemperatur betrieben wird und die den Heizkreisläufen (3) jeweils zugeordneten Wärmepumpenkreisläufe (5) abgeschaltet sind, so dass das Heizmedium des jeweiligen Heizkreislaufs (3) alleine durch Wärmetausch mit dem jeweils zugeordneten Netz/Heizkreislauf-Wärmetauscher (2) erwärmt wird, und
**dass** das Wärmenetz in definierten zweiten Betriebszuständen, insbesondere in definierten Teillast- oder Schwachlastbetriebszuständen, mit einer Wärmenetz-Vorlauftemperatur, die kleiner als die erste Wärmenetz-Vorlauftemperatur ist, betrieben wird und zudem die den Heizkreisläufen (3) jeweils zugeordneten Wärmepumpenkreisläufe (5) zugeschaltet sind, so dass das vom jeweiligen Netz/Heizkreislauf-Wärmetauscher (2) auf eine erste Heizmedium-Temperatur erwärmte Heizmedium auf eine zweite Heizmedium-Temperatur, die größer als die erste Heizmedium-Temperatur ist, erwärmt wird.

4. Verfahren nach Anspruch 3, **dadurch gekennzeichnet, dass** die Wärmenetz-Vorlauftemperatur in den definierten ersten Betriebszuständen, insbesondere in definierten Volllast- oder Hochlastbetriebszuständen, in denen der Wärmepumpenkreislauf (5) abgeschaltet ist, 50°C bis 95°C, insbesondere 55°C bis 75°C beträgt, und
dass die Wärmenetz-Vorlauftemperatur in den definierten zweiten Betriebszuständen, insbesondere in definierten Teillast- oder Schwachlastbetriebszuständen, in denen der Wärmepumpenkreislauf (5) zugeschaltet ist, 20°C bis 60°C beträgt, insbesondere 20°C bis 50°C beträgt.

5. Verfahren nach einem der Ansprüche 2 bis 4, **dadurch gekennzeichnet, dass** den Verdampfer (4) verlassende Wärmenetzmedium mittels einer Rückführleitung (14) stromauf des Verdampfers (4) und stromab des Netz/Heizkreislauf-Wärmetauschers (2) in die Netz-Vorlaufleitung (1) rückgeführt wird.

6. Verfahren nach Anspruch 1 oder 2, **dadurch gekennzeichnet,**
**dass** das Wärmenetz mit einer definierten Wärmenetz-Vorlauftemperatur, bevorzugt von 20°C bis 60°C, höchst bevorzugt von 20°C bis 50°C, betrieben wird, und
**dass** der dem Heizkreislauf (3) zugeordnete Wärmepumpenkreislauf (5) dauerhaft zugeschaltet ist, so dass das eine erste Heizmedium-Temperatur aufweisende Heizmedium mittels des Kondensators (7) auf eine zweite Heizmedium-Temperatur, die größer als die erste Heizmedium-Temperatur ist, erwärmt wird.

7. Verfahren nach einem der vorhergehenden Ansprüche, **dadurch gekennzeichnet, dass** der Wärmepumpenkreislauf (5) so ausgelegt ist, dass dieser am Kondensator (7) einen Temperaturhub ausführt, mittels dem das Heizmedium auf eine Temperatur von 50°C bis 80°C, insbesondere von 60°C bis 75°C, als zweite Heizmedium-Temperatur erwärmt wird.

8. Verfahren nach einem der vorhergehenden Ansprüche, **dadurch gekennzeichnet, dass** das den Verdampfer (4) verlassende Wärmenetzmedium solange im Kreislauf geführt und wieder stromauf des Verdampfers (4) in die Netz-Vorlaufleitung (1) eingespeist wird, bis das Wärmenetzmedium eine Rücklauftemperatur von 10°C bis 30°C, insbesondere von 20°C bis 30°C, erreicht hat.

9. Verfahren nach einem der vorhergehenden Ansprüche, **dadurch gekennzeichnet, dass** dem Wärmenetz Wärme aus einem Energiekraftwerk zugeführt wird, insbesondere aus einem Blockheizkraftwerk (BHKW) und/oder einer Biogasanlage, wobei mittels dem Energiekraftwerk Strom erzeugt wird, der über eine separate Stromleitung, die vorzugsweise entlang der Netzleitungen geführt ist, zu dem Verdichter (6) des Wärmepumpenkreislaufs (5) geführt ist und/oder dass der Strom aus einem öffentlichen Netz bezogen wird, und wobei eine Energieverteilereinrichtung (17) vorgesehen ist, mittels der den Verdichtern (6) der Wärmepumpenkreisläufe (5) der benötigte Strom last- und/oder bedarfsabhängig für jeden Heizkreislauf (3) zugeführt wird.

10. Verfahren nach einem der vorhergehenden Ansprüche, **dadurch gekennzeichnet, dass** wenigstens einem der Heizkreisläufe (3) ein Photovoltaik-Modul zugeordnet ist, mittels dem Strom erzeugbar ist, wobei der Strom aus dem Photovoltaik-Modul zu vorgegebenen Zeiten für eine vorgegebene Zeitdauer dem Wärmepumpenkreislauf (5) zugeführt wird, um diesen einzuschalten und/oder um den Verdichter (6) des Wärmepumpenkreislaufs (5) zu betätigen, so dass das durch Wasser gebildete Heizmedium des Heizkreislaufs (3) aufgeheizt wird und in einen dem Heizkreislauf (3) zugeordneten Schichtspeicher (11) geschichtet eingespeichert wird.

11. Verfahren nach einem der Ansprüche 2 bis 10, **dadurch gekennzeichnet, dass** stromauf des wenigstens einen Netz/Heizkreislauf-Wärmetauschers (2) eine Bypassleitung (15) von einer Rücklaufleitung (12) des Heizkreislaufes (3) abzweigt, die zum einen stromab des wenigstens einen Netz/Heizkreislauf-Wärmetauschers (2) und zum anderen stromauf des Kondensators (7) des Wärmepumpenkreislaufes (5) in eine Vorlaufleitung des Heizkreislaufes (3) mündet, so dass bei definiert vorgegebenen Betriebszuständen, insbesondere bei definierten Betriebszuständen der zweiten Betriebszustände, der wenigstens eine Netz/Heizkreislauf-Wärmetauscher (2) überbrückt und das Heizmedium alleine durch den Wärmepumpenkreislauf (5) erwärmt wird.

12. Vorrichtung zur Einkopplung von Wärme aus einem Wärmenetz in eine Mehrzahl von daran angeschlossenen Heizkreisläufen (3), in denen jeweils wenigstens ein Wärmeverbraucher (10) angeordnet ist, insbesondere zur Durchführung eines Verfahrens nach einem der vorstehenden Ansprüche,
wobei zur Einkopplung der Wärme vom Wärmenetz in die Heizkreisläufe (3) pro Heizkreislauf (3) wenigstens ein Verdampfer (4) eines Wärmepumpenkreislaufs (5) vorgesehen ist, der dergestalt in eine, ein Wärmenetzmedium führende Wärmenetzleitung des Wärmenetzes eingekoppelt ist, dass ein, vorzugsweise im Kreislauf geführtes, Arbeitsmedium des Wärmepumpenkreislaufs (5) durch Wärmeübertragung vom Wärmenetzmedium verdampfbar ist,
wobei das verdampfte Arbeitsmedium in einem dem Verdampfer (4) nachgeschalteten Verdichter (6) des Wärmepumpenkreislaufs (5) verdichtbar und anschließend zu einem Kondensator (7) des Wärmepumpenkreislaufs (5) förderbar ist, mittels dem das eine erste Heizmedium-Temperatur aufweisende und den Kondensator (7) durchströmende Heizmedium des Heizkreislaufs (3) durch Wärmeübertragung vom Arbeitsmedium auf eine zweite Heizmedium-Temperatur, die größer als die erste Heizmedium-Temperatur ist, erwärmbar ist,
**dadurch gekennzeichnet,**
**dass** von einer vom Verdampfer (4) abführenden Wärmenetz-Rücklaufleitung (13) eine Rückführleitung (14) abzweigt, die stromauf des Verdampfers (4) in die Wärmenetz-Vorlaufleitung (1) mündet.

13. Vorrichtung nach Anspruch 12, **dadurch gekennzeichnet,**
**dass** zur Einkopplung der Wärme vom Wärmenetz in die Heizkreisläufe (3) für wenigstens einen Teil der Heizkreisläufe (3), insbesondere pro Heizkreislauf (3), weiter wenigstens ein Netz/Heizkreislauf-Wärmetauscher (2) vorgesehen ist, der stromauf des Verdampfers (4) in die Netz-Vorlaufleitung (1) eingekoppelt ist und mittels dem Wärme von dem in der Netz-Vorlaufleitung (1) des Wärmenetzes geführten Wärmenetzmedium an das in einer Rücklaufleitung (12) des Heizkreislaufes (3) geführte Heizmedium übertragbar ist, und
**dass** der Kondensator (7) des Wärmepumpenkreislaufs (5) stromab des Netz/Heizkreislauf-Wärmetauschers (2) in den Heizkreislauf (3) eingeschaltet ist, so dass dort das vom Netz/Heizkreislauf-Wärmetauscher (2) kommende und eine erste Heizmedium-Temperatur aufweisende, insbesondere vom Netz/Heizkreislauf-Wärmetauscher (2) auf eine erste Heizmedium-Temperatur erwärmte, Heizmedium durch Wärmeübertragung vom Arbeitsmedium auf eine zweite Heizmedium-Temperatur, die größer als die erste Heizmedium-Temperatur ist, erwärmbar ist.

14. Vorrichtung nach Anspruch 13, **dadurch gekennzeichnet, dass** stromauf des wenigstens einen Netz/Heizkreislauf-Wärmetauschers (2) eine Bypassleitung (15) von einer Rücklaufleitung (12) des Heizkreislaufes (3) abzweigt, die zum einen stromab des wenigstens einen Netz/Heizkreislauf-Wärmetauschers (2) und zum anderen stromauf des Kondensators (7) des Wärmepumpenkreislaufes (5) in eine Vorlaufleitung (9) des Heizkreislaufes (3) mündet.

15. Vorrichtung nach Anspruch 13 oder 14, **dadurch gekennzeichnet, dass** die Rückführleitung (14) stromauf des Verdampfers (4) und stromab des Netz/Heizkreislauf-Wärmetauschers (2) in die Netz-Vorlaufleitung (1) mündet.

16. Vorrichtung nach einem der Ansprüche 12 bis 15, **dadurch gekennzeichnet, dass** der Kondensator (7) des Wärmepumpenkreislaufs (5) in einen Schichtspeicher (11) eines Heizkreislaufs (3) integriert ist.

## Claims

1. Method for introducing heat from a heating network into a plurality of heating circuits (3) which are connected thereto and in which at least one heat consumer (10) is in each case arranged,
wherein, in order to introduce the heat from the heating network into the heating circuits (3), at least one evaporator (4) of a heat pump circuit (5) is provided per heating circuit (3), said evaporator being introduced into a heating-network-medium-conducting heating network line of the heating network in such a manner that a working medium of the heat pump circuit (5) is evaporated by transmission of heat from the heating network medium,
wherein the evaporated working medium is compressed in a compressor (6) of the heat pump circuit (5), the compressor being connected downstream of the evaporator (4), and is subsequently conveyed to a condenser (7) of the heat pump circuit (5), by means of which condenser the heating medium of the heating circuit (3), the heating medium having a first heating medium temperature and flowing through the condenser (7), is heated to a second heating medium temperature which is greater than the first heating medium temperature by transmission of heat from the working medium, **characterized**
**in that** the heating network medium leaving the evaporator (4) is conducted in the circuit and is fed again upstream of the evaporator (4) into a network supply line (1) of the heating network line until the heating network medium has reached a defined return temperature.

2. Method according to Claim 1, **characterized**
**in that**, in order to introduce the heat from the heating network into the heating circuits (3), at least one network/heating circuit heat exchanger (2) is furthermore provided for at least some of the heating circuits (3), in particular per heating circuit (3), said network/heating circuit heat exchanger being introduced into the network supply line (1) upstream of the evaporator (4) and by means of which network/heating circuit heat exchanger heat from the heating network medium conducted in the network supply line (1) of the heating network is transmitted to the heating medium conducted in a return line (12) of the heating circuit (3),
**in that** the condenser (7) of the heat pump circuit (5) is connected downstream of the network/heating circuit heat exchanger (2) into the heating circuit (3) such that the heating medium coming from the network/heating circuit heat exchanger (2) and having a first heating medium temperature and in particular being heated by the network/heating circuit heat exchanger (2) to a first heating medium temperature is heated there to a second heating medium temperature which is greater than the first heating medium temperature by transmission of heat from the working medium.

3. Method according to Claim 2, **characterized**
**in that** the introduction of heat is controlled and/or regulated by means of a control and/or regulation device in such a manner that the heating network is operated at a first heating network supply temperature in defined first operating states, in particular in defined full load or high load operating states, and the heat pump circuits (5) respectively assigned to the heating circuits (3) are switched off, and therefore the heating medium of the respective heating circuit (3) is heated solely by heat exchange with the respectively assigned network/heating circuit heat exchanger (2), and
**in that** the heating network is operated at a heating network supply temperature which is lower than the first heating network supply temperature in defined second operating states, in particular in defined partial load or weak load operating states, and, in addition, the heat pump circuits (5) respectively assigned to the heating circuits (3) are switched on such that the heating medium which is heated to a first heating medium temperature by the respective network/heating circuit heat exchanger (2) is heated to a second heating medium temperature which is greater than the first heating medium temperature.

4. Method according to Claim 3, **characterized in that** the heating network supply temperature in the defined first operating states, in particular in defined full load or high load operating states in which the heat pump circuit (5) is switched off, is 50°C to 95°C, in particular 55°C to 75°C, and
**in that** the heating network supply temperature in the defined second operating states, in particular in defined partial load or weak load operating states in which the heat pump circuit (5) is switched on, is 20°C to 60°C, in particular is 20°C to 50°C.

5. Method according to one of Claims 2 to 4, **characterized in that** heating network medium leaving the evaporator (4) is returned into the network supply line (1) by means of a return line (14) upstream of the evaporator (4) and downstream of the network/heating circuit heat exchanger (2).

6. Method according to Claim 1 or 2, **characterized**
**in that** the heating network is operated at a defined heating network supply temperature, preferably of 20°C to 60°C, most preferably of 20°C to 50°C, and
**in that** the heat pump circuit (5) assigned to the heating circuit (3) is permanently switched on, and therefore the heating medium having a first heating medium temperature is heated to a second heating medium temperature which is greater than the first heating medium temperature by means of the condenser (7).

7. Method according to one of the preceding claims, **characterized in that** the heat pump circuit (5) is designed in such a manner that the latter at the condenser (7) implements a rise in temperature by means of which the heating medium is heated to a temperature of 50°C to 80°C, in particular of 60°C to 75°C, as the second heating medium temperature.

8. Method according to one of the preceding claims, **characterized in that** the heating network medium leaving the evaporator (4) is conducted in the circuit and is fed again upstream of the evaporator (4) into the network supply line (1) until the heating network medium has reached a return temperature of 10°C to 30°C, in particular of 20°C to 30°C.

9. Method according to one of the preceding claims, **characterized in that** heat is supplied to the heating network from a power plant, in particular from a combined heat and power plant (CHP plant) and/or from a biogas plant, wherein the power plant generates power which is conducted via a separate power line, which is preferably conducted along the network lines, to the compressor (6) of the heat pump circuit (5), and/or **in that** the power is obtained from a public network, and wherein an energy distributor device (17) is provided by means of which the required power for each heating circuit (3) is supplied depending on loads and/or requirements to the compressors (6) of the heat pump circuits (5).

10. Method according to one of the preceding claims, **characterized in that** a photovoltaic module by means of which power can be generated is assigned to at least one of the heating circuits (3), wherein the power from the photovoltaic module is supplied at predetermined times for a predetermined period of time to the heat pump circuit (5) in order to switch on the latter and/or in order to actuate the compressor (6) of the heat pump circuit (5), and therefore the water-formed heating medium of the heating circuit (3) is heated up and is stored in a stratified manner in a stratified storage tank (11) assigned to the heating circuit (3).

11. Method according to one of Claims 2 to 10, **characterized in that** a bypass line (15) branches off from a return line (12) of the heating circuit (3) upstream of the at least one network/heating circuit heat exchanger (2), said bypass line leading at one end downstream of the at least one network/heating circuit heat exchanger (2) and at the other end upstream of the condenser (7) of the heat pump circuit (5) into a supply line of the heating circuit (3) such that, at defined predetermined operating states, in particular at defined operating states of the second operating states, the at least one network/heating circuit heat exchanger (2) is bypassed and the heating medium is heated solely by the heat pump circuit (5).

12. Apparatus for introducing heat from a heating network into a plurality of heating circuits (3) which are connected thereto and in which at least one heat consumer (10) is in each case arranged, in particular for carrying out a method according to one of the preceding claims, wherein, in order to introduce the heat from the heating network into the heating circuits (3), at least one evaporator (4) of a heat pump circuit (5) is provided per heating circuit (3), said evaporator being introduced into a heating-network-medium-conducting heating network line of the heating network in such a manner that a working medium of the heat pump circuit (5), which is preferably conducted in the circuit, can be evaporated by transmission of heat from the heating network medium,
wherein the evaporated working medium can be compressed in a compressor (6) of the heat pump circuit (5), the compressor being connected downstream of the evaporator (4), and can be subsequently conveyed to a condenser (7) of the heat pump circuit (5), by means of which condenser the heating medium of the heating circuit (3), the heating medium having a first heating medium temperature and flowing through the condenser (7), can be heated to a second heating medium temperature which is greater than the first heating medium temperature by transmission of heat from the working medium,
**characterized**
**in that** a return line (14) branches off from a heating network return line (13) leading away from the evaporator (4), the return line (14) leading into the heating network supply line (1) upstream of the evaporator (4).

13. Apparatus according to Claim 12, **characterized in that**, in order to introduce the heat from the heating network into the heating circuits (3), at least one network/heating circuit heat exchanger (2) is furthermore provided for at least some of the heating circuits (3), in particular per heating circuit (3), said network/heating circuit heat exchanger being introduced into the network supply line (1) upstream of the evaporator (4) and by means of which network/heating circuit heat exchanger heat from the heating network medium conducted in the network supply line (1) of the heating network can be transmitted to the heating medium conducted in a return line (12) of the heating circuit (3),
**in that** the condenser (7) of the heat pump circuit (5) is connected downstream of the network/heating circuit heat exchanger (2) into the heating circuit (3) such that the heating medium coming from the network/heating circuit heat exchanger (2) and having a first heating medium temperature and in particular being heated by the network/heating circuit heat exchanger (2) to a first heating medium temperature is heated there to a second heating medium temperature which is greater than the first heating medium temperature by transmission of heat from the working medium.

14. Apparatus according to Claim 13, **characterized in that** a bypass line (15) branches off from a return line (12) of the heating circuit (3) upstream of the at least one network/heating circuit heat exchanger (2), said bypass line opening at one end downstream of the at least one network/heating circuit heat exchanger (2) and at the other end upstream of the condenser (7) of the heat pump circuit (5) into a supply line (9) of the heating circuit (3).

15. Apparatus according to Claim 13 or 14, **characterized in that** the return line (14) leads upstream of the evaporator (4) and downstream of the network/heating circuit heat exchanger (2) into the network supply line (1).

16. Apparatus according to one of Claims 12 to 15, **characterized in that** the condenser (7) of the heat pump circuit (5) is integrated in a stratified storage tank (11) of a heating circuit (3).

## Revendications

1. Procédé d'injection de chaleur depuis un réseau de chaleur dans une multiplicité de circuits de chauffage (3) raccordés à celui-ci, dans lesquels est respectivement disposé au moins un consommateur de chaleur (10), dans lequel il est prévu, pour l'injection de chaleur depuis le réseau de chaleur dans les circuits de chauffage (3), par circuit de chauffage (3) au moins un évaporateur (4) d'un circuit de pompe à chaleur (5), qui est inséré dans une conduite de réseau de chaleur du réseau de chaleur transportant un fluide de réseau de chaleur, de telle manière qu'un fluide de travail du circuit de pompe à chaleur (5) soit vaporisé par transfert de chaleur depuis le fluide de réseau de chaleur,
dans lequel le fluide de travail vaporisé est comprimé dans un compresseur (6) du circuit de pompe à chaleur (5) disposé après l'évaporateur (4) et transporté ensuite vers un condenseur (7) du circuit de pompe à chaleur (5), au moyen duquel le fluide de chauffage du circuit de chauffage (3) présentant une première température de fluide de chauffage et traversant le condenseur (7) est chauffé par transfert de chaleur depuis le fluide de travail à une deuxième température de fluide de chauffage, qui est plus élevée que la première température de fluide de chauffage,
**caractérisé en ce que** le fluide de réseau de chaleur quittant l'évaporateur (4) est conduit dans le circuit et de nouveau introduit en amont de l'évaporateur (4) dans une conduite d'arrivée de réseau (1) de la conduite de réseau de chaleur, jusqu'à ce que le fluide de réseau de chaleur ait atteint une température de retour définie.

2. Procédé selon la revendication 1, **caractérisé en ce que**
pour l'injection de la chaleur depuis le réseau de chaleur dans les circuits de chauffage (3), il est prévu pour au moins une partie des circuits de chauffage (3), en particulier par circuit de chauffage (3), en outre au moins un échangeur de chaleur réseau/circuit de chauffage (2), qui est inséré dans la conduite d'arrivée de réseau (1) en amont de l'évaporateur (4) et au moyen duquel de la chaleur est transférée du fluide de réseau de chaleur conduit dans la conduite d'arrivée de réseau (1) du réseau de chaleur au fluide de chauffage conduit dans une conduite de retour (12) du circuit de chauffage (3), et **en ce que**
le condenseur (7) du circuit de pompe à chaleur (5) est inséré dans le circuit de chauffage (3) en aval de l'échangeur de chaleur réseau/circuit de chauffage (2), de telle manière que le fluide de chauffage provenant de l'échangeur de chaleur réseau/circuit de chauffage (2) et présentant une première température de fluide de chauffage, en particulier chauffé par l'échangeur de chaleur réseau/circuit de chauffage (2) à une première température de fluide de chauffage, y soit chauffé par transfert de chaleur depuis le fluide de travail à une deuxième température de fluide de chauffage, qui est plus élevée que la première température de fluide de chauffage.

3. Procédé selon la revendication 2, **caractérisé en ce que**
l'injection de chaleur est réglée et/ou régulée au moyen d'un dispositif de réglage et/ou de régulation, de telle manière que
le réseau de chaleur fonctionne dans des premiers états de fonctionnement définis, en particulier dans des états de fonctionnement définis à pleine charge et à haute charge, avec une première température d'arrivée de réseau de chaleur, et les circuits de pompe à chaleur (5) respectivement associés aux circuits de chauffage (3) sont coupés de telle manière que le fluide de chauffage du circuit de chauffage respectif (3) soit chauffé uniquement par échange de chaleur avec l'échangeur de chaleur réseau/circuit de chauffage (2) respectivement associé, et que
le réseau de chaleur fonctionne dans des deuxièmes états de fonctionnement définis, en particulier dans des états de fonctionnement définis à charge partielle ou à faible charge, avec une température d'arrivée de réseau de chaleur, qui est inférieure à la première température d'arrivée de réseau de chaleur, et de plus les circuits de pompe à chaleur (5) respectivement associés aux circuits de chauffage (3) sont connectés, de telle manière que le fluide de chauffage chauffé à une première température de fluide de chauffage par l'échangeur de chaleur réseau/circuit de chauffage respectif (2) soit chauffé à une deuxième température de fluide de chauffage, qui est plus élevée que la première température de fluide de chauffage.

4. Procédé selon la revendication 3, **caractérisé en ce que** la température d'arrivée de réseau de chaleur dans les premiers états de fonctionnement définis, en particulier dans des états de fonctionnement définis à pleine charge ou à haute charge, dans lesquels le circuit de pompe à chaleur (5) est coupé, vaut 50°C à 95°C, en particulier 55°C à 75°C, et **en ce que**
la température d'arrivée de réseau de chaleur dans les deuxièmes états de fonctionnement définis, en particulier dans des états de fonctionnement définis à charge partielle ou à faible charge, dans lesquels le circuit de pompe à chaleur (5) est connecté, vaut 20°C à 60°C, en particulier 20°C à 50°C.

5. Procédé selon l'une quelconque des revendications 2 à 4, **caractérisé en ce que** du fluide de réseau de chaleur quittant l'évaporateur (4) est renvoyé au moyen d'une conduite de renvoi (14) dans la conduite d'arrivée de réseau (1) en amont de l'évaporateur (4) et en aval de l'échangeur de chaleur réseau/circuit de chauffage (2).

6. Procédé selon la revendication 1 ou 2, **caractérisé en ce que** le réseau de chaleur fonctionne avec une température d'arrivée de réseau de chaleur définie, de préférence de 20°C à 60°C, de préférence encore de 20°C à 50°C, et **en ce que**
le circuit de pompe à chaleur (5) associé au circuit de chauffage (3) est connecté en permanence, de telle manière que le fluide de chauffage présentant une première température de fluide de chauffage soit chauffé au moyen du condenseur (7) à une deuxième température de fluide de chauffage, qui est plus élevée que la première température de fluide de chauffage.

7. Procédé selon l'une quelconque des revendications précédentes, **caractérisé en ce que** le circuit de pompe à chaleur (5) est conçu de telle manière que celui-ci opère au condenseur (7) une hausse de la température, au moyen de laquelle le fluide de chauffage est chauffé à une température de 50°C à 80°C, en particulier de 60°C à 75°C, comme deuxième température de fluide de chauffage.

8. Procédé selon l'une quelconque des revendications précédentes, **caractérisé en ce que** le fluide de réseau de chaleur quittant l'évaporateur (4) est conduit dans le circuit et de nouveau introduit en amont de l'évaporateur (4) dans la conduite d'arrivée de circuit (1), jusqu'à ce que le fluide de réseau de chaleur ait atteint une température de retour de 10°C à 30°C, en particulier de 20°C à 30°C.

9. Procédé selon l'une quelconque des revendications précédentes, **caractérisé en ce que** de la chaleur est fournie au réseau de chaleur, en particulier depuis une centrale de production d'énergie, en particulier depuis une centrale de cogénération (BHKW) et/ou une installation de biogaz, dans lequel on produit au moyen de la centrale de production d'énergie du courant qui est envoyé par une ligne électrique séparée, qui est de préférence menée le long des conduites du réseau, au compresseur (6) du circuit de pompe à chaleur (5) et/ou **en ce que** le courant est prélevé sur un réseau public, et dans lequel il est prévu un dispositif de distribution d'énergie (17), au moyen duquel le courant nécessaire est envoyé aux compresseurs (6) des circuits de pompe à chaleur (5) en fonction de la charge et/ou des besoins pour chaque circuit de chauffage (3).

10. Procédé selon l'une quelconque des revendications précédentes, **caractérisé en ce qu'**un module photovoltaïque est associé à au moins un des circuits de chauffage (3), au moyen duquel il est possible de produire du courant, dans lequel le courant provenant du module photovoltaïque est envoyé à des instants prédéterminés et pendant une durée prédéterminée au circuit de pompe à chaleur (5), pour connecter celui-ci et/ou pour actionner le compresseur (6) du circuit de pompe à chaleur (5), de telle manière que le fluide de chauffage du circuit de chauffage (3) constitué d'eau soit chauffé et soit accumulé par couches dans un accumulateur à charge stratifiée (11) associé au circuit de chauffage (3).

11. Procédé selon l'une quelconque des revendications 2 à 10, **caractérisé en ce qu'**une conduite de dérivation (15) part d'une conduite de retour (12) du circuit de chauffage (3) en amont dudit au moins un échangeur de chaleur réseau/circuit de chauffage (2), laquelle débouche dans une conduite d'arrivée du circuit de chauffage (3) d'une part en aval dudit au moins un échangeur de chaleur réseau/circuit de chauffage (2) et d'autre part en amont du condenseur (7) du circuit de pompe à chaleur (5), de telle manière que, dans des états de fonctionnement prédéterminés définis, en particulier dans des états de fonctionnement définis des deuxièmes états de fonctionnement, ledit au moins un échangeur de chaleur réseau/circuit de chauffage (2) soit contourné et que le fluide de chauffage soit chauffé uniquement par le circuit de pompe à chaleur (5).

12. Dispositif d'injection de chaleur depuis un réseau de chaleur dans une multiplicité de circuits de chauffage (3) raccordés à celui-ci, dans lesquels est respectivement disposé au moins un consommateur de chaleur (10), en particulier pour la mise oeuvre d'un procédé selon l'une quelconque des revendications précédentes,
dans lequel il est prévu, pour l'injection de chaleur depuis le réseau de chaleur dans les circuits de chauffage (3), par circuit de chauffage (3) au moins un évaporateur (4) d'un circuit de pompe à chaleur (5), qui est inséré dans une conduite de réseau de chaleur du réseau de chaleur transportant un fluide de réseau de chaleur, de telle manière qu'un fluide de travail du circuit de pompe à chaleur (5) puisse être vaporisé par transfert de chaleur depuis le fluide de réseau de chaleur,
dans lequel le fluide de travail vaporisé peut être comprimé dans un compresseur (6) du circuit de pompe à chaleur (5) disposé après l'évaporateur (4) et transporté ensuite vers un condenseur (7) du circuit de pompe à chaleur (5), au moyen duquel le fluide de chauffage du circuit de chauffage (3) présentant une première température de fluide de chauffage et traversant le condenseur (7) est chauffé par transfert de chaleur depuis le fluide de travail à une deuxième température de fluide de chauffage, qui est plus élevée que la première température de fluide de chauffage,
**caractérisé en ce qu'**une conduite de renvoi (14) part d'une conduite de retour de réseau de chaleur (13) partant de l'évaporateur (4), laquelle débouche dans la conduite d'arrivée de réseau de chaleur (1) en amont de l'évaporateur (4).

13. Dispositif selon la revendication 12, **caractérisé en ce que**
pour l'injection de la chaleur du réseau de chaleur dans les circuits de chauffage (3) pour au moins une partie des circuits de chauffage (3), en particulier par circuit de chauffage (3), il est en outre prévu au moins un échangeur de chaleur réseau/circuit de chauffage (2), qui est inséré dans la conduite d'arrivée de réseau (1) en amont de l'évaporateur (4) et au moyen duquel de la chaleur peut être transférée du fluide de réseau de chaleur conduit dans la conduite d'arrivée de réseau (1) du réseau de chaleur au fluide de chauffage conduit dans une conduite de retour (12) du circuit de chauffage (3), et **en ce que**
le condenseur (7) du circuit de pompe à chaleur (5) est inséré dans le circuit de chauffage (3) en aval de l'échangeur de chaleur réseau/circuit de chauffage (2), de telle manière que le fluide de chauffage provenant de l'échangeur de chaleur réseau/circuit de chauffage (2) et présentant une première température de fluide de chauffage, en particulier chauffé par l'échangeur de chaleur réseau/circuit de chauffage à une première température de fluide de chauffage, y soit chauffé par transfert de chaleur depuis le fluide de travail à une deuxième température de fluide de chauffage, qui est plus élevée que la première température de fluide de chauffage.

14. Dispositif selon la revendication 13, **caractérisé en ce qu'**une conduite de dérivation (15) part d'une conduite de retour (12) du circuit de chauffage (3) en amont dudit au moins un échangeur de chaleur réseau/circuit de chauffage (2), laquelle débouche dans une conduite d'arrivée (9) du circuit de chauffage (3) d'une part en aval dudit au moins un échangeur de chaleur réseau/circuit de chauffage (2) et d'autre part en amont du condenseur (7) du circuit de pompe à chaleur (5).

15. Dispositif selon la revendication 13 ou 14, **caractérisé en ce que** la conduite de renvoi (14) débouche dans la conduite d'arrivée de réseau (1) en amont de l'évaporateur (4) et en aval de l'échangeur de chaleur réseau/circuit de chauffage (2).

16. Dispositif selon l'une quelconque des revendications 12 à 15, **caractérisé en ce que** le condenseur (7) du circuit de pompe à chaleur (5) est intégré dans un accumulateur à charge stratifiée (11) d'un circuit de chauffage (3).
